# NOUVEAU FASCICULE DE BREVET EUROPEEN

(11) **EP 1 328 485 B2**
(45) Date de publication et mention de la décision concernant l'opposition: **08.06.2022**
(45) Mention de la délivrance du brevet: 13.04.2011
(21) Numéro de dépôt: 01969896.8
(22) Date de dépôt: 14.09.2001
(51) Int. Cl.: C04B 24/16, C04B 28/14, C04B 28/10

(54) **COMPOSITION DE TENSIOACTIFS POUR PLAQUES DE PLATRE**
TENSIDZUSAMMENSETZUNG FÜR GIPSBAUPLATTEN
SURFACTANT COMPOSITION FOR GYPSUM PLASTER BOARDS

(30) Priorité: 22.09.2000 FR 0012091
(43) Date de publication de la demande: 23.07.2003
(73) Titulaire: Siniat, 84000 Avignon (FR)
(72) Inventeur: MARTIN, Daniel, F-69007 Lyon (FR); GARCIN, Robert, F-38080 L'Isle d'Abeau (FR); SABIO, Serge, F-38540 Saint Just Chaleyssin (FR)
(74) Mandataire: August Debouzy
(86) Numéro de dépôt international: PCT/FR2001/002866
(87) Numéro de publication internationale: WO 2002/024595

(56) Documents cités:
- WO-A-00/06518
- WO-A-95/16515
- WO-A-99/08978
- US-A- 5 158 612
- US-A- 5 240 639
- US-A- 5 643 510
- DATABASE WPI Section Ch, Week 198334 Derwent Publications Ltd., London, GB; Class E16, AN 1983-746130 XP002186418 & SU 967 996 A (VLASENKO I G), 23 octobre 1982 (1982-10-23)

## Description

La présente invention concerne une composition de plâtre contenant une composition de tensioactifs, en particulier pour la fabrication de plaques de plâtre allégées ainsi qu'un procédé de fabrication de plaques de plâtre mettant en oeuvre une composition de tensioactifs et les plaques de plâtre allégées ainsi fabriquées.

Une plaque de plâtre est un élément parallélépipédique préfabriqué en plâtre (sulfate de calcium dihydraté) recouvert par un carton ou un papier ou encore des fibres minérales sur chacune de ses faces. Le composite ainsi formé présente de bonnes propriétés mécaniques, les feuilles sur les faces servant à la fois d'armature et de parement.

L'âme de plâtre est obtenue à partir d'une pâte de plâtre formée principalement par mélange de sulfate de calcium hydratable et d'eau, additionnée le cas échéant d'adjuvants habituels. Par « sulfate de calcium hydratable », il faut entendre, dans le présent exposé, un sulfate de calcium anhydre (anhydrite II ou III) ou un sulfate de calcium semi-hydraté (CaSO₄·½H₂O) sous sa forme cristalline α ou β. De tels composés sont bien connus de l'homme du métier et sont généralement obtenus par cuisson d'un gypse.

La pâte durcit rapidement par hydratation du plâtre. Ensuite, les plaques sont chauffées dans des séchoirs afin d'éliminer l'excès d'eau.

L'allègement des plaques de plâtre, outre leur résistance mécanique, constitue un enjeu capital. Afin d'alléger la plaque de plâtre, il est courant d'introduire de l'air dans la pâte en ajoutant une mousse à la pâte de plâtre.

En général, la mousse est formée par introduction d'air dans une solution aqueuse de tensioactif au moyen d'un dispositif adapté.

Dans le but d'améliorer les plaques de plâtre existantes, et notamment d'obtenir des plaques de plâtre à densité réduite et présentant une bonne résistance mécanique, un certain nombre d'études ont été menées pour optimiser le tensioactif utilisé au regard de la densité de la plaque de plâtre obtenue.

La réduction de la densité des plaques de plâtres est recherchée pour son double intérêt économique : D'une part, elle permet d'alléger le produit et d'en faciliter ainsi son transport, et d'autre part, elle permet de surmonter la limitation de la cadence de production par la diminution de la demande en plâtre. En effet, la calcination du gypse exige du temps et il est possible que cette étape soit un élément limitant la vitesse de la ligne de production. La diminution de la demande en plâtre permet en outre de réduire les coûts de production liés à la cuisson. Ainsi, la réduction de la densité des plaques de plâtre permet de diminuer les coûts de transport, d'augmenter la vitesse de ligne et en même temps de diminuer les coûts de production.

Des compositions de tensioactifs pour alléger les plaques de plâtre sont connues. Ainsi est décrite une composition de tensioactifs à base d'alkylsulfates et d'alkyléthersulfates dans WO9516515. Dans cette composition, le ratio entre alkylsulfates et alkyldi- ou triéthersulfates est d'au moins 12 : 1, de préférence entre 30 :1 et 60 :1.

Il est indiqué dans ce document que les alkylsulfates seuls sont indésirables.

Le document WO 9009495 enseigne en outre que des bulles de grande taille et de forme sensiblement sphérique favorisent une bonne résistance mécanique de la plaque de plâtre, sous condition que ces bulles soient « discrètes », à savoir isolées et intactes, et qu'elles soient de préférence distribuées de façon régulière au coeur de la plaque de plâtre. Ce type de distribution de bulles est obtenu avec un tensioactif comprenant un sel d'alkyléthersulfate répondant à la formule :

CH₃(CH₂)ₓCH₂ - (OCH₂CH₂)_{y}-OSO₃M

dans lequel au moins 90% de x est compris entre 6 et 8 et la valeur moyenne de y est comprise entre 0.4 et 1.3, M étant un cation formant un tensioactif soluble dans l'eau. Un tel tensioactif avec un degré d'alkoxylation inférieur à 1 correspond à un mélange d'alkylsulfate éthoxylé (alkyléthersulfate) et d'alkylsulfate non éthoxylé. Ainsi, la composition contient entre 44 et 85% en poids d'alkylsulfate (y=0).

Il s'est cependant avéré qu'une telle structure à grosses bulles d'air régulièrement réparties n'est pas toujours obtenue avec ce type de composition de tensioactifs.

US 5,643,510 décrit une composition de tensioactifs comprenant un mélange d'alkylsulfates et d'alkyléthersulfates permettant de contrôler la taille des bulles. Le document enseigne en outre que les alkylsulfates formant des mousses instables ne sont pas utilisés en raison de leur consommation qui est de 7,32 g/m², ce qui est une surconsommation par rapport à la consommation d'un agent moussant contenant un alkylsulfate et un alkyléther-sulfate qui est de l'ordre de 0,98 à 2,92 g/m² (0,2 - 0,6 pound / 1000 sqft). L'utilisation d'un alkylsulfate seul est décrite comme entraînant une surconsommation notable en tensioactif.

Il est cependant préférable en termes de coût d'utiliser comme tensioactif un alkylsulfate au lieu d'un alkyléthersulfate. En effet, alors que l'alkylsulfate peut être obtenu par sulfatation directe de l'alcool gras correspondant, il faut passer par une étape d'éthoxylation pour obtenir l'alkyléthersulfate. Cette étape est non seulement coûteuse mais peut conduire en outre à la formation de produits secondaires indésirables.

A l'exception de SU967996 et SU1252322, jusqu'à présent, les alkylsulfates n'ont pu être mis en oeuvre qu'en mélange avec des alkyléthersulfates car leur pouvoir moussant est insuffisant. Il s'avère qu'un dosage considérablement plus élevé est nécessaire afin d'atteindre le volume de mousse souhaité, ce qui entraîne un surcoût considérable.

Le problème que se propose de résoudre l'invention consiste alors à proposer un tensioactif peu onéreux, aisément préparé à partir de produits du commerce et présentant un fort pouvoir moussant.

La qualité du tensioactif est évaluée par rapport au volume de mousse formée, mais aussi par rapport à sa stabilité une fois qu'il est introduit dans la pâte de plâtre.

La robustesse du tensioactif par rapport aux différents procédés de génération de mousse utilisés constitue également une propriété recherchée.

Un autre problème rencontré concerne la transportabilité d'une solution de tensioactif. En effet, il est fréquent qu'un tensioactif donne des résultats très satisfaisants sur un type de gypse et pourtant se révèle décevant sur un autre site utilisant un type de gypse différent. Il est donc intéressant de disposer d'une solution de tensioactif qui permet d'obtenir des résultats comparables pour différents types de gypse.

Enfin, la plaque de plâtre doit, même allégée, présenter d'excellentes caractéristiques mécaniques.

L'invention a donc pour objet une composition de plâtre contenant une composition de tensioactifs qui résout ces problèmes. Une composition de tensioactifs tant binaire que ternaire fait également l'objet de l'invention.

L'objet de la présente invention est donc une composition de plâtre comprenant en association avec du plâtre et de l'eau une composition de tensioactifs, comprenant des alkylsulfates de formule H(CH2)nOSO3 - M+, dans laquelle n est de 6 à 16 et le nombre moyen d'atomes de carbone dans la composition, d'alkylsulfates nm est compris entre 10,1 et 10,7, et M est soit un cation monovalent cation monovalent de sodium, soit un cation monovalent d'ammonium.

Par nₘ, nombre moyen d'atomes de carbone de la composition, on entend la somme des n des alkylsulfates pondérée par leur concentration en poids de la composition de tensioactifs. Selon l'invention, nₘ est compris entre 10,1 et 10,7.

Le nombre d'atomes de carbone n dans la composition de tensioactifs particulièrement préféré est de 6 à 14.

Selon un mode de réalisation, la composition de tensioactifs comprend trois alkylsulfates.

De préférence, la composition de tensioactifs comprend 40 à 90% en poids de décylsulfate. La composition de tensioactifs comprend en outre de préférence 0 à 30 %, de préférence 1 à 25% en poids d'octylsulfate. Enfin, la composition de tensioactifs comprend de préférence 10 à 50% en poids de dodécylsulfate.

Selon un mode de réalisation avantageux, le cation monovalent M est choisi parmi le sodium et l'ammonium.

Une composition de tensioactifs selon l'invention particulièrement avantageuse comprend 55 à 75% en poids de décylsulfate de sodium, 0 à 15% en poids d'octylsulfate de sodium et 18 à 37% en poids de dodécylsulfate de sodium.

Par ailleurs, la composition de tensioactifs peut en outre comprendre un séquestrant et/ou un hydrotrope.

Un autre objet de l'invention est un procédé de fabrication d'une composition de plâtre selon l'invention, comprenant les étapes de :
- préparation d'une pâte de plâtre à partir de plâtre et d'eau ;
- formation d'une mousse à partir d'une composition de tensioactifs comprenant des alkylsulfates de formule H(CH₂)ₙOSO₃⁻M⁺, dans laquelle n est un nombre entre 6 et 16 et le nombre moyen d'atomes de carbone dans la composition d'alkylsulfates nₘ est compris entre 10,1 et 10,7, et M est soit un cation monovalent de sodium, soit un cation monovalent d'ammonium et d'eau ; et
- mélange de la pâte de plâtre et de la mousse de tensioactif.

Un autre objet de l'invention est une plaque de plâtre, susceptible d'être obtenue à partir d'une telle composition de plâtre.

Enfin, un dernier objet de l'invention concerne un procédé de fabrication de plaques de plâtre comprenant les étapes de :
- préparation d'une pâte de plâtre à partir de plâtre et d'eau ;
- formation d'une mousse à partir d'une composition de tensioactifs comprenant des alkylsulfates de formule H(CH₂)ₙOSO₃⁻M⁺, dans laquelle n est un nombre entre 6 et 16 et le nombre moyen d'atomes de carbone dans la composition d'alkylsulfates nₘ est compris entre 10,1 et 10,7, nₘ étant égal à la somme des n des alkylsulfates pondérée par leur concentration en poids dans la composition, et M est soit un cation monovalent de sodium, soit un cation monovalent d'ammonium et d'eau ; et
- mélange de la pâte de plâtre et de la mousse de tensioactif ;
- coulage de la composition de plâtre entre deux couches de matériau extérieur ;
- séchage de la plaque de plâtre.

Selon un mode de réalisation préféré, la composition de plâtre est définie comme exposé ci-dessus.

D'autres caractéristiques et avantages de l'invention vont maintenant être décrits en détail dans l'exposé qui suit et qui est donné en référence aux figures, dans lesquelles :
- la figure 1 représente un cliché photographique de la microstructure d'une plaque de plâtre obtenue avec une composition de tensioactifs selon l'invention,
- la figure 2 représente un cliché photographique de la microstructure d'une plaque de plâtre obtenue avec une composition de tensioactifs de comparaison.

L'invention a donc pour objet une composition de plâtre contenant une composition de tensioactifs à base d'alkylsulfates permettant de fabriquer des plaques de plâtre allégées présentant une bonne résistance mécanique.

La composition de plâtre selon l'invention comprend du plâtre, de l'eau et une composition de tensioactifs. Elle peut par ailleurs contenir d'autres additifs tels qu'utilisés habituellement.

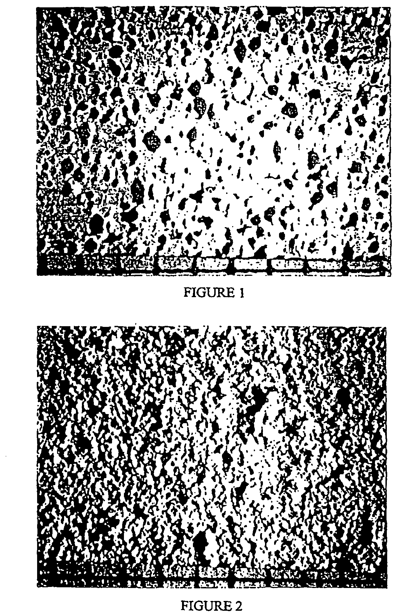

Comme le montrent les figures 1 et 2, la structure d'une plaque de plâtre allégée telle qu'observée sur la tranche, diffère nettement entre une plaque obtenue avec un tensioactif conventionnel (F1919 disponible chez Cognis) et avec une composition selon l'invention (exemple 1). En effet, on observe que les plaques de plâtre conventionnelles présentent une structure caractérisée par la présence de bulles de petite taille. En contraste, une plaque de plâtre obtenue avec une composition de plâtre contenant un tensioactif selon l'invention présente des bulles de taille plus importante, isolées et intactes. La différence structurelle au niveau des plaques de plâtre a pour conséquence des propriétés différentes.

En effet, il a été découvert que certaines compositions d'alkylsulfates objet de l'invention ne présentent pas les inconvénients en raison desquels les alkylsulfates ne sont pas utilisés comme tensioactifs pour la fabrication de plaques de plâtre. D'une part, ils présentent un pouvoir moussant très élevé et n'entraînent ainsi pas de surconsommation en tensioactif. D'autre part, de telles compositions permettent l'obtention de mousses stables et compatibles avec la pâte de plâtre. Ainsi, l'introduction de ces mousses dans la pâte de plâtre permet d'obtenir des plaques de plâtre allégées ayant de bonnes propriétés mécaniques.

En outre, une telle composition de tensioactifs est robuste. Par « robuste », on entend dans le présent exposé le fait pour une composition de tensioactifs d'être susceptible de former une quantité de mousse donnée au moyen de méthodes de génération de mousse différentes. De telles méthodes de génération de mousse sont par exemple le Waring Blender, par lequel on forme une mousse par agitation à grande vitesse de pales croisées et aiguisées, le Hamilton Beach, dans lequel l'agitation est effectuée à l'aide d'une turbine faiblement crantée ou encore l'Ultraturax avec une turbine équipée de couteaux tournants à grande vitesse (rotor) et de fentes latérales (stator). Cette robustesse se retrouve au niveau des procédés industriels de génération de mousse (pompes centrifuges en série, générateurs statiques BABCOOK-BSH etc.)

De plus, la mousse formée par la composition de tensioactifs selon l'invention permet d'obtenir des allègements comparables pour des plaques de plâtre réalisées avec différents types de gypse. Ainsi, la composition de tensioactifs est avantageuse en ce qu'elle est peu sensible à la qualité de gypse mis en œuvre.

Par ailleurs, les caractéristiques de la mousse formée par la composition de tensioactifs sont peu sensibles à la température. Ainsi, lorsque la température de l'eau varie, le volume de mousse généré reste sensiblement constant.

Une autre caractéristique avantageuse de la composition de tensioactifs selon l'invention est la constance de la densité de la plaque de plâtre obtenue. En effet, il a été observé que l'utilisation d'un alkylsulfate seul conduit à des plaques de plâtre d'une densité très variable. La composition de plâtre contenant une composition de tensioactifs selon l'invention quant à elle conduit à des plaques de plâtre d'une densité constante. Par « densité constante », on entend une densité dont la variation dans la plaque et entre plaques du même lot n'excède pas 3%, de préférence 2%. En outre, il s'est avéré que la qualité de liaison entre le plâtre et la feuille externe des plaques de plâtre selon l'invention est remarquable.

Les plaques de plâtre obtenues avec la composition selon l'invention possèdent des qualités mécaniques excellentes. La résistance mécanique de plaques de plâtre est habituellement évaluée par leur résistance en flexion du cœur, la dureté du cœur, la dureté superficielle et la résistance finale de la plaque de plâtre. D'une grande importance pratique est également la résistance qu'oppose la plaque de plâtre à l'enfoncement d'une tête de clou de ¼ de pouce, ce qu'il est convenu d'appeler le « nail pull resistance », tel que décrit dans la norme ASTM C473-méthode B.

Par ailleurs, il s'avère que les plaques de plâtre obtenues montrent une bonne liaison entre le plâtre et la feuille externe. Ceci est dû en particulier à la structure des bulles obtenues avec la composition de tensioactifs selon l'invention.

Par ailleurs, la composition de tensioactifs pour la composition de plâtre selon l'invention comprend des alkylsulfates de formule H(CH₂)ₙOSO₃⁻M⁺, dans laquelle n est de 6 à 16 et le nombre moyen d'atomes de carbone dans la composition d'alkylsulfates, nₘ est compris entre 10,1 et 10,7, et M est soit un cation monovalent de sodium, soit un cation monovalent d'ammonium.

Une telle composition peut être obtenue facilement par simple addition d'un alkylsulfate en C12, tel que le TEXAPON K12-98 disponible chez COGNIS ou le Emal E 30 disponible chez KAO CORPORATION SA, et à un mélange d'alkylsulfate en C8 et C10 (tel que par exemple le Emal A10 DE commercialisé par KAO CORPORATION SA).

Les alkylsulfates répondant à la formule H(CH₂)ₙ-OSO₃M sont en général obtenus par sulfatation des alcools correspondants. En principe, n est le plus souvent un nombre pair en raison de la meilleure disponibilité de ces alcools. Cependant, les alkylsulfates avec n impair peuvent également être utilisés dans le cadre de l'invention.

De préférence, la chaîne des alkylsulfates entrant dans la composition comprend de 8 à 12 atomes de carbone.

La composition de tensioactifs peut en outre renfermer un hydrotrope. De tels hydrotropes sont par exemple le méthanol, éthanol, isopropanol, éthylène glycol, propylène glycol, polyéthylène glycol et polypropylène glycol ainsi que des monoalkyléthers d'éthylène glycol, les alkyl polyglycosides et leurs mélanges.

Avantageusement, la composition peut comprendre un agent séquestrant ou chélatant, qui permet de maintenir en solution les ions de magnésium ou de calcium en particulier dans l'eau dure. De tels agents séquestrants ou chélatants sont par exemple les acides hydroxy-carboxyliques et leurs sels, les aldoses et cétoses, les complexants minéraux, plus particulièrement les phosphates, les borates et les polyphosphates, les complexants organiques choisis plus particulièrement dans le groupe comprenant l'EDTA, le NTA etc. et les dérivés de l'acide phosphorique de structure polymère qui contiennent des groupes hydroxy et/ou amine et/ou carboxylate.

La mousse obtenue permet d'introduire dans la plaque de plâtre de 0,01 à 0,04% en poids de tensioactif (exprimé en sec) par rapport au poids de la plaque. Elle représente un volume compris entre 20 à 40% de celui de la plaque de plâtre.

La pâte de plâtre moussée peut avantageusement contenir par ailleurs des adjuvants utilisés habituellement tels que des fluidifiants, accélérateurs, amidon etc.

L'invention sera mieux comprise au regard des exemples suivants, qui sont données à titre illustratif et non limitatif.

### EXEMPLES

### Exemple 1

On prépare des miniplaques de 0.1m² ayant une épaisseur de 12,5mm à partir de plâtre de St Loubès, qui est un plâtre obtenu par cuisson flash d'un gypse naturel ayant les caractéristiques suivantes :

| | |
|---|---|
| - teneur en gypse : | 68,8% |
| - anhydrite : | 0,90% |
| - magnésie : | 3,70% |
| - dolomite : | 8,80% |
| - talc : | 0,80% |
| - phlogopite : | 1,10% |
| - microline : | 3,80% |
| - quartz : | 9,50% |
| - celestine : | 0,60% |
| - clinochlore : | 2,00%. |

Ces plaques sont préparées de la manière suivante : On prépare une mousse par agitation pendant 1 minute dans un générateur de mousse du type Hamilton Beach réglé à une tension de 55 Volts d'un mélange de 5.25ml d'une solution à 50g/l d'une composition constituée par des alkylsulfates de sodium contenant 7,7% en poids de C8, 73,1% en poids en C10 et 19,2% en poids en C12, le nombre moyen de carbone nₘ, en tenant compte des masses molaires des constituants, étant 10,23 avec 170ml d'eau à 22°C. La mousse est ensuite introduite dans un mélange de 700g d'eau à une température de 50°C et de 1130g de plâtre à une température de 22°C. La pâte de plâtre est déposée entre deux feuilles de carton. L'excédent après remplissage est éliminé. La miniplaque est ensuite séchée dans une étuve à une température croissant régulièrement de 100°C à 200°C en 15 min, puis décroissant régulièrement de 200°C à 90°C en 25 min.

### Exemple 2

Des plaques de plâtre sont fabriquées selon l'exemple 1, mais en remplaçant la composition de tensioactifs par la même quantité d'un tensioactif contenant 84,2% en poids d'alkylsulfate en C10 et 15,8% en poids d'alkylsulfate en C12. Le nombre moyen d'atomes de carbone nₘ dans la composition est de 10,32.

### Exemple 3

Des plaques de plâtre sont fabriquées selon l'exemple 1, mais en remplaçant la composition de tensioactifs par la même quantité d'un tensioactif contenant 95% en poids d'alkylsulfate en C10 et 5% en poids d'alkylsulfate en C12. Le nombre moyen d'atomes de carbone nₘ dans la composition est de 10,10.

### Exemple 4

Des plaques de plâtre sont fabriquées selon l'exemple 1, mais en remplaçant la composition de tensioactifs par la même quantité d'un tensioactif contenant 5,5% en poids d'alkylsulfate en C8, 83,5 en poids d'alkylsulfate en C10 et 11% en poids d'alkylsulfate en C12. Le nombre moyen d'atomes de carbone nₘ dans la composition est de 10,10.

### Exemple 5

Des plaques de plâtre sont fabriquées selon l'exemple 1, mais en remplaçant la composition de tensioactifs par la même quantité d'un tensioactif contenant un alkylsulfate (AS) et un alkyléthersulfate (AES). Ce tensioactif est vendu par la société COGNIS sous la dénomination F1919.

### Exemple 6

Des plaques de plâtre sont fabriquées selon l'exemple 1, mais en remplaçant la composition de tensioactifs par la même quantité d'un tensioactif contenant un alkylsulfate (AS) et un alkyléthersulfate (AES). Ce tensioactif est vendu par la société STEPAN sous la dénomination alphafoamer.

Le pouvoir moussant des compositions de tensioactifs est évaluée au regard du volume de mousse qu'elles sont capables de former pour une concentration donnée. Pour cela, on mélange 5,5 ml d'une solution de la composition de tensioactifs à 50 g/l avec 170 ml d'eau. La solution obtenue est agitée dans un malaxeur Hamilton Beach réglé à 6000 t/min pendant 1 minute. Le volume de mousse formé est mesuré immédiatement. Les résultats sont consignés dans le tableau 1 ci-dessous.

Les plaques réalisées selon les exemples, une fois séchées à poids constant en accord avec la norme française 72-302, sont pesées et on détermine leur poids ramené au m². Les résultats sont consignés dans le tableau 1 ci-dessous.

**Tableau 1**

| Exemple | nₘ | Volume de mousse [ml] | Poids Unitaire [kg/m²] |
|---|---|---|---|
| 1 | 10,23 | 760 | 8,31 |
| 2 | 10,32 | 710 | 8,43 |
| 3 | 10,1 | 690 | 8,78 |
| 4 | 10,1 | 730 | 8,56 |
| 5* | AS + AES | 755 | 8,44 |
| 6* | AS + AES | 750 | 8,75 |
| * Exemples de comparaison | | | |

Les compositions selon l'invention permettent sans surconsommation par rapport aux mélanges d'alkylsulfates et d'alkyléthersulfates d'obtenir des volumes de mousse comparables. La mousse obtenue est stable et conduit à un allègement des plaques de plâtre identique ou supérieur à celui obtenu selon l'art antérieur. L'exemple 1 illustre une réalisation préférentielle d'une composition de tensioactifs selon l'invention. Les exemples 4 et 3 mettent en outre en évidence que ces performances peuvent être dépassées par une combinaison ternaire d'alkylsulfates d'un même nₘ donné par rapport à une combinaison binaire. En effet, non seulement la composition ternaire génère une quantité plus importante de mousse, mais encore il s'avère que celle-ci permet l'obtention d'une plaque de densité plus faible que la composition binaire de même nₘ.

Les compositions X, Y et Z correspondent aux mélanges d'alkylsulfates suivants (en poids) :

| | |
|---|---|
| X : | 25% C8 - 75% C10 |
| Y : | 50% C8 - 50% C10 |
| Z : | 75% C8 - 25% C10 |

Elles permettent de mettre en évidence que lorsque nm est inférieur à 10, pour un dosage identique à celui des exemples du Tableau 1, le volume de mousse généré n'est pas suffisant. Cela se traduit ensuite par le fait que la mousse obtenue ne permet pas d'atteindre un niveau suffisant d'allègement des plaques. A volume de mousse équivalent (composition X comparée à l'exemple 3), l'allègement insuffisant met en évidence l'instabilité de la mousse obtenue. Ceci ressort des résultats d'essais portés dans le tableau 2.

**Tableau 2**

| Exemple | nₘ | Volume de mousse [ml] | Poids Unitaire [kg/m²] |
|---|---|---|---|
| X | 9,35 | 690 | 9,06 |
| Y | 9 | 685 | 9,13 |
| Z | 8,5 | 680 | 9,86 |
| * Exemples de comparaison | | | |

Pour évaluer les propriétés mécaniques des plaques, on mesure la résistance à la compression à partir d'un échantillon de 5x5 cm² prélevé sur la plaque. La dureté superficielle et la charge à rupture du coeur (essai de flexion à trois points) sont mesurées selon la norme NF P 72-302.

La dureté du coeur est mesurée selon la norme ASTM C473 méthode B. R_{c} est le rapport entre la résistance en compression de la plaque et son poids au m². Pour des plaques de même épaisseur, il permet de comparer entre elles la résistance en compression de plaques qui n'ont pas exactement la même densité. Il met en évidence l'amélioration apportée par les compositions de tensioactifs sur la caractéristique résistance mécanique.

L'ensemble des caractéristiques des plaques de plâtre obtenues grâce aux compositions selon l'invention est supérieur ou égal à l'art antérieur.

Ainsi, à performance mécanique suffisante, le mode de réalisation préférentiel correspond à celui qui conduit à l'allègement maximum. C'est l'exemple 1 (composition correspondant à un nₘ de 10,23) qui correspond à la réalisation préférentielle.

Les résultats de ces mesures sont consignés dans le tableau 3 ci-dessous.

**Tableau 3**

| Exemple | nₘ | Contrainte en compression [MPa] | Dureté superficielle [mm] | Dureté coeur [DaN] | Nail pull resistance [DaN] | Rc poids [Mpa·m²/kg] |
|---|---|---|---|---|---|---|
| 1 | 10,23 | 2,99 | 19,3 | 8,6 | 32,9 | 0,35 |
| 2 | 10,32 | 3,06 | 19,0 | 7,8 | 32,4 | 0,36 |
| 3 | 10,1 | 3,34 | 18,9 | 9,8 | 34,6 | 0,38 |
| 4 | 10,1 | 3,36 | 18,9 | 9,4 | 33,6 | 0,39 |
| 5* | AS + AES | 2,33 | 20,0 | 6,9 | 30,2 | 0,27 |
| 6* | AS + AES | 2,59 | 19,8 | 7,6 | 32,6 | 0,29 |
| * Exemples de comparaison | | | | | | |

**Tableau 4**

| Exemple | Liaison sèche [% décollement] | Liaison humide après 2 heures [% décollement] |
|---|---|---|
| 1 | 0 | 5 |
| 2 | 0 | 3 |
| 3 | 0 | 3 |
| 4 | 0 | 3 |
| 5* | 12 | 100 |
| 6* | 3 | 30 |
| *exemples de comparaison | | |

Par ailleurs, les plaques de plâtre préparées ont été caractérisées par la mesure de la liaison entre le carton et le coeur. La mesure consiste à arracher le carton et à évaluer le pourcentage de décollement du carton du coeur. Le test de liaison sèche est fait sur une plaque sèche. Le test de liaison humide après 2 heures est fait après réhumidification pendant 2 heures à 30°C en atmosphère contrôlée à 90% d'humidité. Les résultats sont portés dans le tableau 4 ci-dessus.

Les résultats mettent en évidence la supériorité des compositions selon l'invention au niveau de la liaison tant sèche qu'humide après 2 heures, notamment vis à vis de tensioactifs contenant des alkyléthersulfates.

## Revendications

1. Composition de plâtre comprenant, en association avec du plâtre et de l'eau, une composition de tensioactifs, comprenant des alkylsulfates de formule H(CH₂)nOSO₃⁻ M⁺,
dans laquelle n est de 6 à 16 et le nombre moyen d'atomes de carbone dans la composition d'alkylsulfates nm est compris entre 10,1 et 10,7, nₘ étant égal à la somme des n des alkylsulfates pondérée par leur concentration en poids dans la composition, et M est un cation monovalent de sodium.

2. Composition de plâtre comprenant, en association avec du plâtre et de l'eau, une composition de tensioactifs, comprenant des alkylsulfates de formule H(CH₂)nOSO₃⁻ M⁺,
dans laquelle n est de 6 à 16 et le nombre moyen d'atomes de carbone dans la composition d'alkylsulfates nm est compris entre 10,1 et 10,7, nₘ étant égal à la somme des n des alkylsulfates pondérée par leur concentration en poids dans la composition, et M est un cation monovalent d'ammonium.

3. Composition selon l'une des revendications 1 à 2, dans laquelle la composition de tensioactifs comprend trois alkylsulfates.

4. Composition selon l'une des revendications 1 à 3, dans laquelle la composition de tensioactifs comprend 40 à 90% en poids de décylsulfate.

5. Composition selon l'une des revendications 1 à 4, dans laquelle la composition de tensioactifs comprend 0 à 30% en poids d'octylsulfate.

6. Composition selon l'une des revendications 1 à 5, dans laquelle la composition de tensioactifs comprend 10 à 50% en poids de dodécylsulfate.

7. Composition selon l'une des revendications 1 à 6, dans laquelle la composition de tensioactifs comprend 55 à 75% en poids de décylsulfate de sodium, 0 à 15% en poids d'octylsulfate de sodium et 18 à 37% en poids de dodécylsulfate de sodium.

8. Composition selon l'une des revendications 1 à 7, dans laquelle la composition de tensioactifs comprend en outre un séquestrant.

9. Composition selon l'une des revendications 1 à 8, dans laquelle la composition de tensioactifs comprend en outre un hydrotrope.

10. Procédé de fabrication d'une composition de plâtre selon l'une des revendications précédentes, comprenant l'étape de :
- préparation d'une pâte de plâtre à partir de plâtre et d'eau ;
- formation d'une mousse à partir d'une composition de tensioactifs comprenant des alkylsulfates de formule H(CH₂)nOSO₃⁻M⁺, dans laquelle n est un nombre entre 6 et 16 et le nombre moyen d'atomes de carbone dans la composition d'alkylsulfates nₘ est compris entre 10,1 et 10,7, et M est soit un cation monovalent de sodium, soit un cation monovalent d'ammonium et d'eau ; et
- mélange de la pâte de plâtre et de la mousse de tensioactif.

11. Plaque de plâtre, susceptible d'être obtenue à partir d'une composition de plâtre selon la revendication 10.

12. Procédé de fabrication de plaques de plâtre comprenant les étapes de :
- préparation d'une pâte de plâtre à partir de plâtre et d'eau ;
- formation d'une mousse à partir d'une composition de tensioactifs comprenant des alkylsulfates de formule H(CH₂)nOSO₃⁻ M⁺, dans laquelle n est un nombre entre 6 et 16 et le nombre moyen d'atomes de carbone dans la composition d'alkylsulfates nₘ est compris entre 10,1 et 10,7, nₘ étant égal à la somme des n des alkylsulfates pondérée par leur concentration en poids dans la composition, et M est soit un cation monovalent de sodium, soit un cation monovalent d'ammonium et d'eau ; et
- mélange de la pâte de plâtre et de la mousse de tensioactif ;
- coulage de la composition de plâtre entre deux couches de matériau extérieur
- séchage de la plaque de plâtre.

13. Procédé de fabrication selon la revendication 12, dans lequel la composition de plâtre est définie par l'une des revendications 2 à 9.

## Patentansprüche

1. Gipszusammensetzung, umfassend zusammen mit Gips und Wasser eine Zusammensetzung aus grenzflächenaktiven Substanzen, umfassend Alkylsulfate der Formel H(CH₂)ₙOSO₃₋M+,
wobei n 6 bis 16 ist und die durchschnittliche Zahl der Kohlenstoffatome in der Zusammensetzung aus Alkylsulfaten nₘ zwischen 10,1 und 10,7 liegt, wobei nₘ gleich der Summe der n der Alkylsulfate, gewichtet durch ihre Gewichtskonzentration, in der Zusammensetzung ist, und M ein einwertiges Natriumkation ist.

2. Gipszusammensetzung, umfassend zusammen mit Gips und Wasser eine Zusammensetzung aus grenzenflächenaktiven Substanzen, umfassend Alkylsulfate der Formel H(CH₂)ₙOSO₃₋M+,
wobei n 6 bis 16 ist und die durchschnittliche Zahl der Kohlenstoffatome in der Zusammensetzung aus Alkylsulfaten nₘ zwischen 10,1 und 10,7 liegt, wobei nₘ gleich der Summe der n der Alkylsulfate, gewichtet durch ihre Gewichtskonzentration, in der Zusammensetzung ist, und M ein einwertiges Ammoniumkation ist.

3. Zusammensetzung gemäß einem der Ansprüche 1 bis 2, wobei die Zusammensetzung aus grenzflächenaktiven Substanzen drei Alkylsulfate umfasst.

4. Zusammensetzung gemäß einem der Ansprüche 1 bis 3, wobei die Zusammensetzung aus grenzflächenaktiven Substanzen 40 bis 90 Gewichts-% Decylsulfat umfasst.

5. Zusammensetzung gemäß einem der Ansprüche 1 bis 4, wobei die Zusammensetzung aus grenzflächenaktiven Substanzen 0 bis 30 Gewichts-% Octylsulfat umfasst.

6. Zusammensetzung gemäß einem der Ansprüche 1 bis 5, wobei die Zusammensetzung aus grenzflächenaktiven Substanzen 10 bis 50 Gewichts-% Dodecylsulfat umfasst.

7. Zusammensetzung gemäß einem der Ansprüche 1 bis 6, wobei die Zusammensetzug aus grenzflächenaktiven Substanzen 55 bis 75 Gewichts-% Natriumdecylsulfat, 0 bis 15 Gewichts-% Natriumoctylsulfat und 18 bis 37 Gewichts-% Natriumdodecylsulfat umfasst.

8. Zusammensetzung gemäß einem der Ansprüche 1 bis 7, wobei die Zusammensetzung aus grenzflächenaktiven Substanzen außerdem ein Sequestriermittel umfasst.

9. Zusammensetzung gemäß einem der Ansprüche 1 bis 8, wobei die Zusammensetzung aus grenzflächenaktiven Substanzen außerdem eine hydrotrope Verbindung umfasst.

10. Verfahren zur Herstellung einer Gipszusammensetzung gemäß einem der vorangehenden Ansprüche, umfassend die Stufen:
- Herstellung einer Gipsmasse ausgehend von Gips und Wasser;
- Bildung eines Schaums ausgehend von einer Zusammensetzung aus grenzflächenaktiven Substanzen, umfassend Alkylsulfate der Formel H(CH₂)ₙOSO₃-M+,wobei n eine ganze Zahl zwischen 6 und 16 ist und die durchschnittliche Zahl der Kohlenstoffatome in der Zusammensetzung aus Alkylsulfaten nₘ zwischen 10,1 und 10,7 liegt, und M entweder ein einwertiges Natriumkation oder ein einwertiges Ammoniumkation ist, und Wasser, und
- Vermischen der Gipsmasse und des Schaums aus grenzflächenaktiver Substanz.

11. Gipsplatte, die aus einer Gipszusammensetzung gemäß Anspruch 10 erhalten werden kann.

12. Verfahren zur Herstellung von Gipsplatten, umfassend die Stufen:
- Herstellung einer Gipsmasse ausgehend von Gips und Wasser;
- Bildung eines Schaums ausgehend von einer Zusammensetzung aus grenzflächenaktiven Substanzen, umfassend Alkylsulfate der Formel H(CH₂)ₙOSO₃₋M+, wobei n eine ganze Zahl zwischen 6 und 16 ist und die durchschnittliche Zahl der Kohlenstoffatome in der Zusammensetzung aus Alkylsulfaten nₘ zwischen 10,1 und 10,7 liegt, wobei nₘ gleich der Summe der n der Alkylsulfate, gewichtet durch ihre Gewichtskonzentration, und M entweder ein einwertiges Natriumkation oder ein einwertiges Ammoniumkation ist, und Wasser,
und
- Vermischen der Gipsmasse und des Schaums aus grenzflächenaktiver Substanz;
- Gießen der Gipszusammensetzung zwischen zwei Schichten aus äußerem Material;
- Trocknen der Gipsplatte.

13. Verfahren zur Herstellung gemäß Anspruch 12, wobei die Gipszusammensetzung durch einen der Ansprüche 2 bis 9 definiert ist.

## Claims

1. A gypsum composition comprising, in combination with gypsum and water, a surfactant composition, comprising alkyl sulphates of formula H(CH₂)nOSO₃⁻M⁺,
wherein n is from 6 to 16 and the average number of carbon atoms in the alkyl sulphate composition, nₘ is between 10.1 and 10.7, nₘ being equal to the sum of the n of the alkyl sulphates weighted by their concentration by weight in the composition, and M is a monovalent sodium cation.

2. A gypsum composition comprising, in combination with gypsum and water, a surfactant composition, comprising alkyl sulphates of formula H(CH₂)nOSO₃⁻M⁺,
wherein n is from 6 to 16 and the average number of carbon atoms in the alkyl sulphate composition, nₘ is between 10.1 and 10.7, nₘ being equal to the sum of the n of the alkyl sulphates weighted by their concentration by weight in the composition, and M is a monovalent ammonium cation.

3. The composition according to any one of claims 1 to 2, wherein the surfactant composition comprises three alkylsulphates.

4. The composition according to any one of claims 1 to 3, wherein the surfactant composition comprises 40 to 90% by weight of decyl sulphate.

5. The composition according to any one of claims 1 to 4, wherein the surfactant composition comprises 0 to 30% by weight of octyl sulphate.

6. The composition according to any one of claims 1 to 5, wherein the surfactant composition comprises 10 to 50% by weight of dodecyl sulphate.

7. The composition according to any one of claims 1 to 6, wherein the surfactant composition comprises 55 to 75% by weight of sodium decyl sulphate, 0 to 15% by weight of sodium octyl sulphate and 18 to 37% by weight of sodium dodecyl sulphate.

8. The composition according to any one of claims 1 to 7, wherein the surfactant composition further comprises a sequestering agent.

9. The composition according to any one of claims 1 to 8, wherein the surfactant composition further comprises a hydrotropic agent.

10. A process for the production of a gypsum composition according to any one of the previous claims, comprising the steps of:
- preparing a gypsum slurry from gypsum and water;
- forming a foam from a surfactant composition comprising alkyl sulphates of formula H(CH₂)nOSO₃⁻M⁺, wherein n is between 6 and 16 and the average number of carbon atoms in the alkyl sulphate composition, nₘ, is between 10.1 and 10.7, and M is either a monovalent sodium cation, or a monovalent ammonium cation, and water; and
- mixing the gypsum slurry and the surfactant foam.

11. A gypsum board, obtainable from a gypsum composition according to claim 10.

12. A process for the production of gypsum boards comprising the steps of:
- preparing a gypsum slurry from gypsum and water;
- forming a foam from a surfactant composition comprising alkyl sulphates of formula H(CH₂)ₙOSO₃-M+, wherein
n is between 6 and 16 and the average number of carbon atoms in the alkyl sulphate composition, nₘ is comprised between 10.1 and 10.7, nₘ being equal to the sum of the n of the alkyl sulphates weighted by their concentration by weight in the composition, and M is either a monovalent sodium cation, or a monovalent ammonium cation, and water; and
- mixing the gypsum slurry and the surfactant foam;
- pouring the gypsum composition between two layers of external material
- drying the gypsum board.

13. A process of production according to claim 12, wherein the gypsum composition is defined by any one of claims 2 to 9.
